Europäisches Patentamt

European Patent Office

Office européen des brevets

(11) Numéro de publication : **0 475 797 B1**

## (12) FASCICULE DE BREVET EUROPEEN

(45) Date de publication du fascicule du brevet :
24.05.95 Bulletin 95/21

(51) Int. Cl.⁶ : **G02B 25/00, G02B 23/08, G02B 23/12**

(21) Numéro de dépôt : **91402174.6**

(22) Date de dépôt : **02.08.91**

(54) **Système optique large champ et grande ouverture, notamment destiné à une voie de nuit pour épiscope, et épiscope équipé d'un tel système optique.**

(30) Priorité : **14.08.90 FR 9010325**

(43) Date de publication de la demande :
**18.03.92 Bulletin 92/12**

(45) Mention de la délivrance du brevet :
**24.05.95 Bulletin 95/21**

(84) Etats contractants désignés :
**CH DE GB IT LI NL SE**

(56) Documents cités :
**EP-A- 0 124 682**
**EP-A- 0 192 309**
**DE-A- 3 221 184**
**US-A- 3 768 890**
**US-A- 3 922 072**
**US-A- 4 076 978**
**US-A- 4 792 214**

(73) Titulaire : **THOMSON-TRT DEFENSE**
**Rue Guynemer**
**F-78280 Guyancourt (FR)**

(72) Inventeur : **Espie, Jean-Luc**
**THOMSON-CSF,**
**SCPI,**
**Cedex 67**
**F-92045 Paris la Defence (FR)**
Inventeur : **Gonnaud, Isabelle**
**THOMSON-CSF,**
**SCPI,**
**Cedex 67**
**F-92045 Paris la Defence (FR)**

(74) Mandataire : **Albert, Claude et al**
**THOMSON-CSF**
**SCPI**
**B.P. 329**
**50, rue J.P. Timbaud**
**F-92402 COURBEVOIE CEDEX (FR)**

## Description

Le domaine de l'invention est celui des lentilles optiques grandissantes et plus précisément des systèmes optiques bioculaires destinés à être insérés dans la voie de nuit d'un système d'observation, entre un tube intensificateur de lumière et les yeux d'un observateur.

L'invention trouve une application particulière dans les appareils d'observation pour véhicules blindés, et notamment les épiscopes pour chars de combat.

Toutefois le système optique de l'invention trouve bien entendu application à chaque fois qu'on retrouve un contexte optique analogue à celui détaillé plus loin.

Dans le cas particulier des véhicules blindés, le pilote dispose généralement, pour la vision de jour, d'au moins un épiscope optique classique, dit voie de jour, comprenant un réflecteur d'entrée recevant les rayons lumineux, et un réflecteur de sortie restituant les rayons lumineux au pilote. Selon le type d'épiscope, le trajet des rayons lumineux entre les deux réflecteurs peut être direct ou subir une ou plusieurs réflexions.

La voie de jour assure une vision optimale, tant que l'éclairement est suffisant. En revanche, elle ne permet pas le pilotage de nuit. Il n'est pas possible en effet, au moins en position de combat, d'utiliser des moyens d'éclairage intégrés au véhicule. Il est donc nécessaire d'utiliser une voie de nuit électronique, restituant au pilote une image visible du paysage, et comprenant par exemple un objectif, un tube intensificateur de lumière et un bioculaire.

Les épiscopes connus ont cependant des dimensions trop importantes pour pouvoir être adaptés dans un équipement jour/nuit. Outre l'inconvénient majeur de présenter au pilote de char une image plus basse que celle fournie par les épiscopes de jour, ils utilisent toute la place disponible entre l'oeil du pilote et le blindage interdisant ainsi l'interposition d'une voie de jour.

Du fait qu'un épiscope doit être aisément remplaçable par un autre, par exemple en cas de détérioration ou de mauvais fonctionnement, ou alors tout simplement pour effectuer des réglages de maintenance, il se présente généralement sous la forme d'un ensemble compact comprenant tous ses éléments constitutifs (réflecteur de déviation des rayons optiques, bâti mécanique de la voie de nuit, objectifs, tube intensificateur de lumière, réflecteurs de la voie de jour, etc...).

Afin de donner à un tel épiscope des dimensions les plus restreintes possibles, divers mécanismes peuvent être utilisés.

Un mécanisme permettant de passer d'une vision par voie de jour à une vision par voie de nuit est par exemple décrit dans la demande de brevet français N° 90 07838 concernant un "bâti mécanique articulé, notamment pour épiscope, et épiscope monté dans un tel bâti". Le passage d'une voie de visualisation à l'autre est effectué en nécessitant un minimum de place, grâce à un mécanisme compact de commande en basculement d'un réflecteur dirigeant les rayons lumineux sélectivement vers une voie ou vers l'autre.

Dans le même objectif, il s'avère également intéressant de songer à une réduction de la taille des bioculaires équipant les épiscopes. Dans un épiscope, le bioculaire est en effet disposé en face de l'utilisateur et occupe ainsi un espace relativement important. La contrainte d'encombrement peut ainsi imposer que le système optique comporte notamment une partie coudée permettant aux rayons lumineux sortant verticalement du tube intensificateur d'être déviés horizontalement en direction des yeux de l'utilisateur.

Outre la contrainte d'encombrement, la conception d'un bioculaire pour épiscope est soumise à la compatibilité avec les autres éléments de la chaîne optique. Ainsi, les bioculaires doivent pouvoir être adaptés, pour des raisons de modularité et d'économie, aux dimensions des tubes intensificateurs existants, et notamment à celles des épiscopes équipant les chars de combat des types Leclerc, AMX 30 ou T (noms "commerciaux").

La conception d'un système optique de la voie de nuit d'un épiscope requiert donc un choix d'un couple tube intensificateur/bioculaire.

On connaît ainsi des bioculaires pour voies de nuit d'épiscopes couplés à des tubes intensificateurs 20/30 mm, par exemple le tube intensificateur XX 1380 de PHILIPS (marque déposée).

Cependant, le champ de vision offert par ces bioculaires n'est pas assez étendu pour permettre un confort satisfaisant pour la conduite d'un véhicule blindé et notamment d'un char.

On connaît également des formules de bioculaires adaptées à des tubes intensificateurs 25/25 mm largement répandus du type MX 9644/UV, le couplage entre le tube intensificateur et le bioculaire étant réalisé à l'aide d'un ensemble de fibres grandisseuses 25/46 mm.

Le principal inconvénient de ce type de bioculaire est que le rapport de grandissement nécessaire pour amener l'image à un diamètre suffisant est de 1,6, ce qui entraîne une réduction de l'ouverture de la fibre en sortie incompatible avec une grande ouverture du bioculaire. Ceci se traduit par un assombrissement de la partie centrale du champ pour une position nominale des yeux de l'observateur et une perte de contraste due aux fibres. De plus, cette solution est trop encombrante pour la plupart des applications jour/nuit.

Un troisième type de formule de bioculaire adapté à des épiscopes trouve application dans des tubes

2

25/40 mm du type TH 9311 de THOMSON (nom déposé). Ces tubes sont bien adaptés aux critères d'encombrement et de qualité d'image, mais présentent l'inconvénient d'être d'un prix de revient élevé.

On connaît d'autre part le document de brevet américain n° 3.922.072 de ROGERS concernant des combinaisons optiques pour dispositifs de vision de nuit, l'image étant formée sur un écran à "phosphore", typiquement un tube intensificateur, et amplifiée par des lentilles. Les combinaisons optiques décrites sont d'un type comprenant trois groupes de lentilles, tous convergents. Le premier groupe, appelé groupe avant est caractérisé par une distance focale comprise entre 3F et 12F, où F est la focale de la combinaison concernée, le deuxième groupe, appelé groupe médian, a une focale comprise entre 1,6F et 2F et le troisième groupe, appelé groupe arrière, a une focale comprise entre 1F et 1,75F. Le troisième groupe est constitué d'un ménisque positif convexe vers l'avant dont la face arrière peut avoir un rayon infini, c'est à dire être plane.

Les combinaisons réalisées ne permettent cependant pas d'obtenir un nombre d'ouverture suffisamment faible, si bien que l'observateur doit positionner ses yeux dans une zone réduite de l'espace.

En outre, il est nécessaire de mettre au point une formule optique radicalement nouvelle, du fait qu'il n'est pas possible d'étendre indéfiniment le domaine d'efficience des formules existantes, par simple modification quantitative. On arrive en effet en limite de fonctionnement, pour une combinaison optique donnée, dès qu'on atteint une taille limite de lentille.

La présente invention a notamment pour objectif de pallier ces inconvénients.

Plus précisément, un premier objectif de la présente invention est de fournir une nouvelle formule optique bioculaire pouvant notamment être utilisée dans une voie de nuit pour épiscope, pour assurer la transmission d'images depuis la sortie sur écran d'un tube intensificateur de lumière jusqu'aux yeux de l'utilisateur.

Un autre objectif de la présente invention est de fournir une telle formule optique pour bioculaire qui soit à la fois à large champ et grande ouverture.

Un objectif supplémentaire de la présente invention est de présenter un bioculaire d'encombrement réduit. De plus, le bioculaire doit pouvoir présenter un verre coudé ayant pour fonction de dévier les rayons verticaux provenant du tube intensificateur de lumière vers le verre d'oeil d'axe sensiblement horizontal.

Un objectif complémentaire de la présente invention est d'obtenir une formule optique correspondant à une position nominale des yeux de l'observateur à 100 mm du verre d'oeil environ. De cette façon, les pupilles sont éloignées du premier dioptre afin de permettre la présence d'un réflecteur escamotable permettant le renvoi de l'image de l'une des voies (la voie de jour, par exemple) lorsque cette voie est sélectionnée.

La présente invention a également pour objectif de fournir une formule optique pour bioculaire d'une voie de nuit respectant le cahier des charges suivant:
- champ en entrée supérieur ou égal à 45°;
- grossissement supérieur ou égal à 0,9;
- ouverture du bioculaire suffisamment importante, de l'ordre de 100 mm, afin d'éviter l'impression de voir à travers une meurtrière (l'écartement standard des yeux pouvant par exemple être évalué de l'ordre de 64 mm);
- la focale doit être de l'ordre de 40 mm (pour un écran de 30 mm de diamètre), ce qui impose un nombre d'ouverture très faible pour respecter la valeur du diamètre de pupille d'entrée;
- le champ de recouvrement doit être de bonne qualité et étendu, au moins égal à 15°, dans le plan de visualisation de l'utilisateur. Pour que le cerveau de l'observateur puisse reconstituer l'image en vision bioculaire, il faut que l'image de chaque oeil soit à peu près identique. Le champ de recouvrement doit donc couvrir un pourcentage important du champ dans la portion centrale de l'image;
- la présence d'un verre coudé doit permettre de dévier, à 90° par exemple, les rayons sortant du tube intensificateur vers les yeux de l'utilisateur. La présence d'un tel coude entraîne un encombrement supplémentaire et introduit des aberrations hors de l'axe;

Ces objectifs, ainsi que d'autres qui apparaîtront par la suite, sont atteints grâce à une formule optique pour bioculaire, du type constitué de deux groupes, un groupe avant et un groupe arrière, ledit groupement avant étant constitué d'une partie avant et d'une partie arrière, la partie avant étant constituée d'une lentille biconvexe et d'un ménisque concave vers l'avant et ledit groupe arrière étant constitué d'un doublet collé à face arrière plane comprenant une lentille convexe convergente collée à une lentille divergente, lesdites lentilles dudit doublet collé présentant des dispersions différentes et complémentaires pour compenser le chromatisme, la focale dudit doublet étant comprise entre 0,85 F et 1,05 F, où F est la focale dudit bioculaire.

Cette configuration essentielle de l'invention permet de laisser passer les rayons dans le champ de recouvrement, sans introduction d'aberration sur l'axe.

Préférentiellement, le centre de courbure de la face avant de ladite lentille convergente dudit doublet est positionné sur l'axe optique de façon à être approximativement centré dans le plan de formation de l'image, en l'occurence sur l'écran.

Selon un mode de mise en oeuvre de l'invention, les indices de la lentille convexe convergente et de la lentille divergente sont compris entre 1,75 et 1,95 environ.

Selon un mode de mise en oeuvre avantageux de la présente invention, ladite partie arrière est constituée d'une lentille biconvexe.

Préférentiellement, ladite lentille biconvexe convergente et ledit ménisque concave de ladite partie avant sont séparés par une lame d'air.

Selon un autre mode de mise en oeuvre, ladite lentille biconvexe convergente et ledit ménisque concave de ladite partie avant sont collés de façon à constituer un doublet.

Avantageusement, ladite lentille biconvexe de ladite partie arrière présente une face arrière plane.

Selon un autre mode de mise en oeuvre, ladite partie arrière est une lame de verre à faces planes et parallèles combinée à un ménisque convexe vers l'avant situé entre ladite partie avant et ladite lame de verre.

Préférentiellement, ladite partie arrière est coudée.

La présence d'un coude dans le système optique selon l'invention permet de dévier les rayons lumineux entrant dans le bioculaire, notamment dans le cas où ceux-ci arrivent verticalement dans le bioculaire et doivent être déviés pour se présenter horizontalement. Ce cas est typiquement celui rencontré dans un épiscope, le pilote visualisant horizontalement les rayons lumineux sortant verticalement d'un tube intensificateur de lumière.

Avantageusement, le système optique selon l'invention est appliqué à un tube intensificateur pour voie de nuit d'un épiscope, la liaison optique entre la sortie écran dudit tube intensificateur de lumière et ledit système étant assurée par une galette de fibres en sortie du tube intensificateur sur laquelle on colle ledit doublet arrière.

Le fait de coller le doublet évite la présence d'une lame d'air d'indice 1 qui provoquerait une réfraction totale des rayons d'incidence moyenne, et donc un champ de recouvrement plus restreint. Le collage permet donc d'augmenter artificiellement l'ouverture des fibres.

Selon un mode de mise en oeuvre de la présente invention, les dispersions des focales desdits groupes avant et arrière sont respectivement compris entre 1,75F et 2,5 F et entre 0,85 F et 1,05 F environ.

Avantageusement, le système optique selon la présente invention s'applique à un épiscope, notamment pour engin blindé.

D'autres caractéristiques et avantages de la présente invention apparaîtront à la lecture de la description suivante d'un mode de mise en oeuvre préférentiel de la présente invention, donné à titre illustratif et non limitatif, et des dessins annexés dans lesquels:

- la figure 1 est un schéma d'une coupe verticale d'un épiscope comprenant une voie de jour et une voie de nuit utilisant un système optique selon la présente invention;
- la figure 2 est un schéma de chaîne optique pour voie de nuit d'un épiscope;
- la figure 3 représente un premier mode de mise en oeuvre d'une formule optique selon la présente invention;
- la figure 4 représente un deuxième mode de mise en oeuvre d'une formule optique selon la présente invention, constituant une variante de la formule de la figure 3;
- la figure 5 représente une variante de la formule optique représentée à la figure 4;
- la figure 6 représente les focales d'astigmatisme de la formule optique 2 de la figure 4.

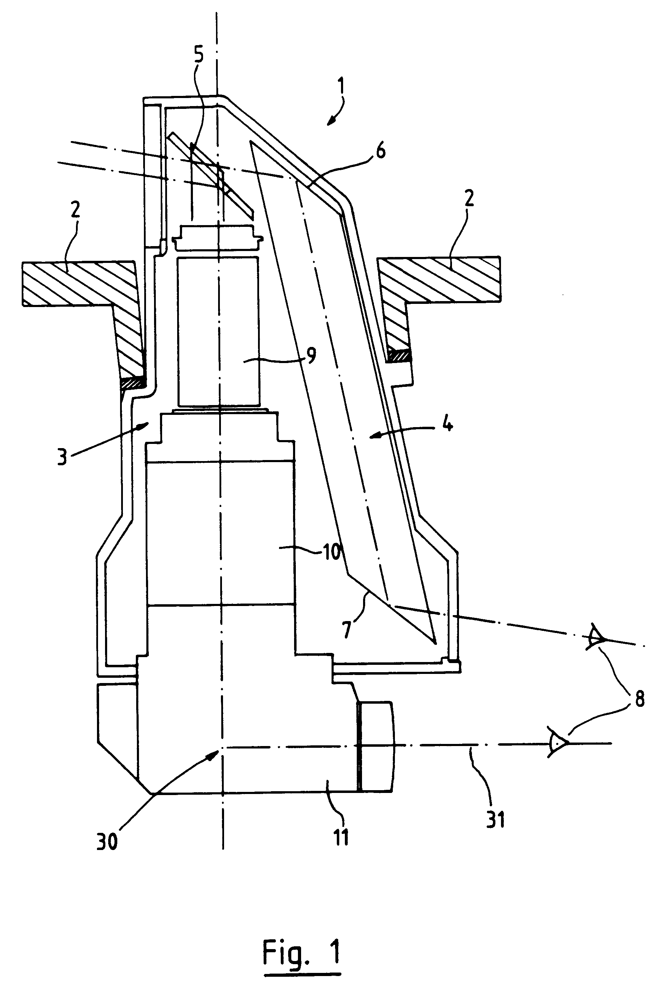

La figure 1 est un schéma d'une coupe verticale d'un épiscope comprenant une voie de jour et une voie de nuit utilisant un système optique selon la présente invention.

Un épiscope 1 traverse le blindage 2 d'un véhicule. L'épiscope 1 comprend deux dispositifs épiscopiques indépendants 3 et 4 juxtaposés.

Les rayons lumineux reçus par la partie supérieure de l'épiscope 1 sont dirigés soit vers le dispositif 3, appelé voie de nuit, soit vers le dispositif 4, appelé voie de jour, selon la position d'un réflecteur escamotable 5. Ce réflecteur peut notamment être un miroir ou un prisme triangulaire.

Lorsque les rayons lumineux sont d'intensité suffisante, le réflecteur escamotable 5 est rabattu de telle sorte que les rayons lumineux passent directement dans la voie de jour 4.

Selon un mode de mise en oeuvre particulier, le premier dispositif 4 peut comprendre deux réflecteurs 6 et 7 réfléchissant les signaux lumineux entrant dans l'épiscope vers un observateur 8, typiquement un conducteur d'engin blindé.

Les signaux lumineux provenant de l'extérieur sont réfléchis par le réflecteur 6 vers le réflecteur 7 qui les envoie vers l'observateur 8.

Lorsque l'épiscope fonctionne en mode jour, c'est-à-dire lorsque les rayons sont admis dans le dispositif 4, l'épiscope est immobile en rotation. Il n'est pas nécessaire de pouvoir tourner la voie de jour en gisement puisque les engins blindés connus comportent généralement deux épiscopes de jour latéraux.

Le passage de la voie de jour 4 à la voie de nuit 3 est effectué par basculement du réflecteur escamotable 5 au-dessus de la voie de nuit 3. Ainsi, les rayons lumineux admis dans l'épiscope sont dirigés vers le deuxième dispositif de traitement 3 et ne parviennent plus à la voie de jour 4.

La voie de nuit 3 est constituée, dans la configuration de la figure 1, d'un objectif 9, d'un tube intensificateur de lumière 10 et d'un bioculaire 11. Le bioculaire 11 permet d'obtenir une image visible par les deux yeux à la sortie du bioculaire 11. Il comporte une partie coudée 30 permettant de renvoyer les rayons lumineux selon un axe 31 sensiblement horizontal en direction des yeux de l'observateur. La constitution du bioculaire est détaillée plus loin.

Les rayons lumineux provenant de l'extérieur sont déviés par le réflecteur escamotable 5 vers l'objectif 9, amplifiés électroniquement par l'intensificateur de lumière 10, pénètrent dans le bioculaire 11 et ressortent du bioculaire 11 pour être visualisés par l'observateur 8.

La voie de nuit 3 peut également être constituée de capteurs infrarouges, CCD ou autres ou de dispositifs de traitement d'un signal lumineux. Par exemple, le tube intensificateur 10 peut être remplacé par un capteur de caméra et un écran de visualisation suivi ou non d'une optique de reprise.

Lorsque l'épiscope 1 selon la présente invention est en position nuit, c'est-à-dire lorsque le réflecteur escamotable 5 est en position active (déviation des rayons lumineux vers la voie 3), l'observateur 8 peut commander le gisement de la voie de nuit, c'est-à-dire sa rotation autour d'un axe vertical. Il est à noter qu'en cas de pivotement en gisement, l'objectif 9 et le tube intensificateur 10 restent avantageusement immobiles, seuls le réflecteur escamotable 5 et le bioculaire 11 étant libres en rotation. Cela permet de réduire l'encombrement général de l'épiscope.

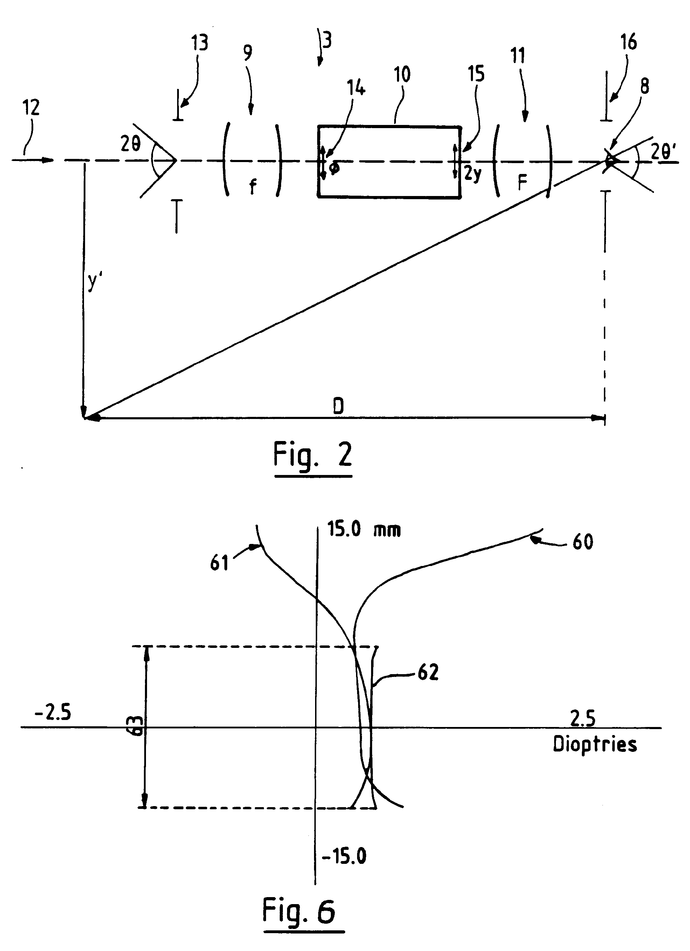

La figure 2 est un schéma de chaîne optique pour voie de nuit 3 d'un épiscope.

Les rayons lumineux entrent dans la chaîne optique de la voie de nuit 3 selon le sens 12 et passent à travers une pupille d'entrée 13 d'angle d'ouverture $2\Theta$ en direction de l'objectif 9 de focale f. L'objectif 9 de focale f forme une image du paysage sur la photocathode 14 du tube intensificateur 10 de diamètre $\phi$. La focale f, le champ $2\Theta$ et le diamètre $\phi$ de la photocathode 14 vérifient la relation:

$$\phi \ = \ 2\,f\,tg\Theta \quad (1)$$

Le tube intensificateur 10 comporte à sa sortie un écran 15 sur lequel se présente l'image dont la luminance a été amplifiée. Le diamètre de l'écran 15 est 2y. Le bioculaire 11 de focale F forme une image de l'écran 15 du tube intensificateur 10 à une distance D d'une pupille de sortie 16. Cette image a pour taille 2y' et est observable dans le plan de la pupille de sortie 16 sous un angle $2\Theta'$. La relation suivante est vérifiée:

$$y' = D.tg\Theta' \quad (2)$$

Le grossissement G de la voie de nuit est défini par:

$$G \ = \ tg\Theta'/tg\Theta \quad (3)$$

Le bioculaire 11 est caractérisé par:
- son grandissement

$$g_y \ = \ y'/y \quad (4)$$

- le diamètre de sa pupille de sortie $\phi_{ps}$
- l'angle $2\Theta'$ sous lequel est vue l'image
- sa focale F définie en bonne approximation pour D>>1 par

$$F \approx y/tg\Theta' \quad (5)$$

- son nombre d'ouverture égal à $F/\phi_{ps}$

La valeur de y dépend du tube intensificateur 10 utilisé.

Une application particulière de l'invention consiste à utiliser un tube intensificateur 10 dont le diamètre de photocathode vaut 20 mm et 2y vaut 30 mm (tube 20/30).

Le cahier des charges de la voie de nuit détermine les valeurs du grossissement G, du champ $2\Theta$ et du diamètre de la pupille $\phi_{ps}$.

Un mode de mise en oeuvre préférentiel de la présente invention consiste à prendre les valeurs suivantes:

G = 0,9

$\Theta > 45°$

$\phi_{ps} = 95$ mm

De plus, D est choisi proche de 2 m car le grossissement G est moins sensible aux variations de D pour un déplacement longitudinal des yeux de l'observateur 8:

si D est grand, G = f . grandissement du tube . $g_y$ / D

Le calcul du système optique précédent est réalisé à partir des relations données:
- à partir de G et $\Theta$, la relation (3) permet d'obtenir $\Theta'$;
- la relation (2) permet d'obtenir y' à partir de D et $\Theta'$;
- la relation (4) permet l'obtention de $g_y$ à partir de y et y';
- la relation (5) donne F à partir de y et $\Theta'$.

De plus, la relation $N = F/\phi_{ps}$ (6) permet d'obtenir le nombre d'ouverture N à partir de la focale F du bioculaire 11 et du diamètre $\phi_{ps}$ de sa pupille.

Ces valeurs sont à comparer avec celles couramment utilisées dans le cas de voies de nuit pour épiscopes:
- 2y compris entre 40 et 46 mm;
- G compris entre 0,9 et 1;
- $\Theta$ = 45°;
- $\phi_{ps}$ = 85 mm.

La relation (6) donne:

$$N = F/\phi_{ps} = y/tg\Theta'.\phi_{ps} = y/G.tg\Theta.\phi_{ps}$$

Ainsi, d'après le cahier des charges, N est 20% plus faible que ce qui est couramment réalisé, d'où la difficulté de réunir les caractéristiques précédentes tout en offrant une image d'excellente qualité.

En présence de distorsion, la relation (1) devient:

$\phi_{ps}$ = 2 f tg$\Theta$ (1 + X) où X est le pourcentage de distorsion.

Pour X<0, avec $\phi_{ps}$ donné, le produit f.tg$\Theta$ est plus élevé, ce qui permet d'augmenter artificiellement le champ $\Theta$ sans pour autant diminuer la focale. Il est alors avantageux d'introduire une distorsion de signe opposé dans le bioculaire 11 pour ne pas obtenir une image finale trop déformée en sortie du bioculaire 11.

A titre indicatif, on obtient une distorsion globale (objectif + tube + bioculaire) très faible, de l'ordre de 0,85%.

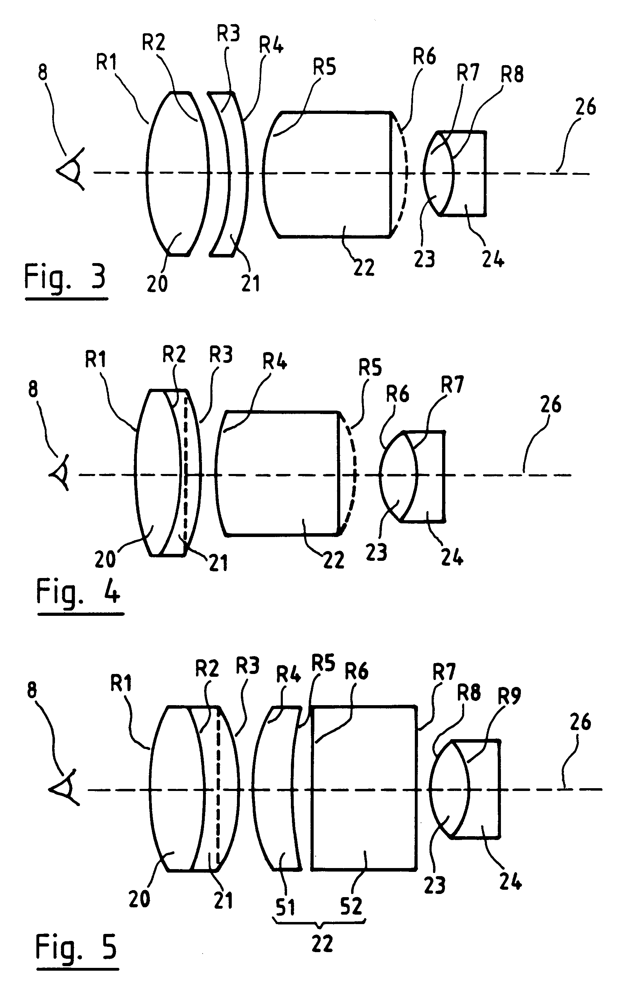

La figure 3 représente un premier mode de mise en oeuvre d'une formule optique selon la présente invention.

La formule représentée, appelée formule 1, est constituée de deux groupes de lentilles:
- un groupe avant constitué d'une partie avant et d'une partie arrière.

La partie avant se situe du côté de l'observateur 8 et est constituée d'une lentille 20 biconvexe convergente et d'un ménisque 21 concave vers l'avant. L'"avant" est défini comme étant le côté de l'observateur 8 et l'"arrière" le côté d'admission des rayons lumineux. La lentille 20 biconvexe possède un rayon avant $R_1$ et un rayon arrière R2, les rayons avant et arrière du ménisque 21 étant respectivement R3 et R4, centrés sur l'axe 26.

La partie arrière du groupe avant est constituée d'une lentille 22 épaisse biconvexe. Les rayons avant et arrière de la lentille biconvexe 22 sont respectivement R5 et R6.
- un groupe arrière composé d'un doublet 23,24 collé à face arrière plane.

Le rayon avant du groupe arrière est R7 et le rayon médian, formant séparation entre les deux éléments 23,24 du doublet, est R8.

Le tableau 1 précise les valeurs des épaisseurs suivant chaque rayon représenté, les valeurs des différents rayons et le matériau qui suit chaque rayon pour la formule 1.

Dans ce mode de réalisation, la lentille 20 biconvexe convergente est séparée du ménisque 21 concave vers l'avant par une lame d'air.

Comme précisé dans le tableau, le rayon arrière R6 peut également être infini, c'est à dire que la face arrière de la lentille 22 peut être plane (en traits pleins sur la figure 3).

La figure 4 représente une variante de la formule 1 de la figure 2, correspondant à un mode de mise en oeuvre préférentiel de la présente invention, appelé formule 2.

La formule 2 consiste à coller la lentille 20 biconvexe convergente au ménisque 21 concave vers l'avant. On obtient ainsi un doublet collé biconvexe. Il est à noter que la face arrière du doublet collé biconvexe peut être plane. Le ménisque collé 21 peut avoir une face arrière plane, comme représenté en traits pointillés. La lentille 22 et le doublet 23,24 restent semblables à ceux de la figure 1, seules les dimensions des rayons et des épaisseurs étant modifiées.

Le tableau 2 précise les épaisseurs et les matériaux utilisés dans la formule 2, selon un mode de mise en oeuvre préférentiel de la présente invention.

EP 0 475 797 B1

## Tableau 1

| Surface | Epaisseur qui suit (mm) | Rayon (mm) | Matériau qui suit |
|---|---|---|---|
| 20, R1 | 27,873 | 91,676 | BK7 |
| 20, R2 | 0,734 | - 93,116 | Air |
| 21, R3 | 3,410 | - 91,154 | SF6 |
| 21, R4 | 0,836 | 1581,437 | Air |
| 22, R5 | 57,927 | 74,086 | SF6 |
| 22, R6 | 0,294 | ∞ | Air |
| 23, R7 | 18,201 | 30,337 | LaSFN30 |
| 23, 24, R8 | 16,274 | - 53,147 | SF57 |

## Tableau 2

| Surface | Epaisseur qui suit (mm) | Rayon (mm) | Matériau qui suit |
|---|---|---|---|
| 20, R1 | 31,002 | 77,535 | BK7 |
| 20, 21, R2 | 3,388 | - 93,087 | SF6 |
| 21, R3 | 0,692 | 747,621 | Air |
| 22, R4 | 56,647 | 81,223 | SF6 |
| 22, R5 | 0,447 | ∞ | Air |
| 23, R6 | 17,641 | 29,104 | LaSFN30 |
| 23, 24, R7 | 16,181 | - 100,461 | SF57 |

La figure 5 représente une variante de la formule 2 représentée à la figure 4.

La partie avant du groupe avant et le groupe arrière restent identiques à ceux représentés dans la formule 2 de la figure 4, seules les dimensions des lentilles étant différentes.

La variante consiste à utiliser un ménisque 51 convexe vers l'avant et une lame de verre 52 à faces planes et parallèles pour constituer la partie arrière 22 du groupe avant.

Les tableaux 3 et 4 suivants donnent des exemples de formules optiques correspondant à la géométrie de la figure 5, appelées respectivement formule 3 et formule 4.

Tableau 3

| Surface | Epaisseur qui suit (mm) | Rayon (mm) | Matériau qui suit |
|---|---|---|---|
| 20, R1 | 31,474 | 81,226 | BK7 |
| 20, 21 R2 | 3,400 | - 86,352 | SF6 |
| 21, R3 | 0 ,716 | 1147,70 | Air |
| 22, R4 | 15,066 | 92,924 | SF6 |
| 22, R5 | 0 ,689 | - 709,581 | Air |
| 22, R6 | 42,430 | ∞ | SF6 |
| 22, R7 | 0 ,464 | ∞ | Air |
| 23, R9 | 18,487 | 29,013 | LaSFN30 |
| 23, 24, R9 | 16,079 | - 164,431 | SF57 |

Tableau 4

| Surface | Epaisseur qui suit (mm) | Rayon (mm) | Matériau qui suit |
|---|---|---|---|
| 20, R1 | 24,970 | 151,561 | BK7 |
| 20, 21, R2 | 3,394 | - 77,005 | SF6 |
| 21, R3 | 0 ,578 | - 352,297 | Air |
| 22, R4 | 19,747 | 70,928 | LaSF9 |
| 22, R5 | 1,685 | 1192,327 | Air |
| 22, R6 | 42,456 | ∞ | SF6 |
| 22, R7 | 0 ,493 | ∞ | Air |
| 23, R8 | 18,571 | 30,910 | LaSFN30 |
| 23, 24, R9 | 14,258 | - 42,799 | SF57 |

Le ménisque collé 21 peut avoir une face arrière plane, comme représenté en traits pointillés.

Il est à noter que les formules 1,2,3 et 4 ne constituent pas une liste exhaustive des possibilités de configuration d'un bioculaire selon la présente invention et que d'autres formules apparaîtront aisément à l'homme du métier sans sortir du cadre de l'invention.

Dans le cas d'une utilisation d'une formule selon l'invention dans une voie de nuit pour épiscope, il est avantageux de disposer d'une lentille coudée parmi celles formant le bioculaire. Une telle lentille coudée a pour fonction de dévier les rayons lumineux sortant verticalement d'un tube intensificateur de lumière vers les yeux de l'utilisateur.

Un mode de mise en oeuvre avantageux de la présente invention consiste à couder la partie arrière du groupe avant du bioculaire. Ainsi, le groupe arrière est dans l'axe du tube intensificateur, la partie arrière du groupe avant dévie à 90° les rayons lumineux et les dirige vers la partie avant du groupe avant, c'est à dire en direction de l'utilisateur. Dans les figures 3 et 4 ce serait ainsi la lentille 22 qui serait coudée et dans la figure 5 la lame de verre 52.

La principale caractéristique de la présente invention est que le groupe arrière est constitué d'un doublet collé de deux matières d'indices de rétraction très élevés et à dispersions différentes et complémentaires pour compenser le chromatisme, par exemple d'un verre de type flint et d'un verre de type crown (la dispersion étant définie comme étant caractéristique de la variation d'indice de réfraction en fonction de la longueur d'onde).

La focale du doublet 23,24 est comprise entre 0,85F et 1,05F, où F est la focale de la combinaison de lentilles de la formule optique.

Les indices de réfraction des deux lentilles du doublet sont compris entre 1,5 et 1,95 et préférentiellement entre 1,75 et 1,95.

Le doublet arrière a pour objectif de laisser passer les rayons dans le champ de recouvrement, sans introduire d'aberration sur l'axe.

Un mode de mise en oeuvre avantageux de la présente invention consiste ainsi à localiser la lentille convergente sur l'axe optique de façon à centrer sensiblement la face arrière convexe de la lentille convergente du doublet dans le plan de l'image.

La lentille biconvexe 24 du doublet 23,24 présente avantageusement une face arrière plane, afin de pouvoir être aisément couplée avec un ensemble de fibres.

Les rayons lumineux entrant dans le bioculaire peuvent notamment provenir d'un tube intensificateur de lumière placé sensiblement perpendiculairement à un axe passant par le bioculaire. Cette configuration de liaison entre un tube intensificateur et le bioculaire entraîne cependant un champ de recouvrement plus réduit, puisqu'elle ne permet pas de prendre en compte les rayons à incidence trop rasante. Cet inconvénient est en partie compensé par le collage de la fibre sur le doublet, notamment sur la lentille 24 biconvexe du doublet, ce qui augmente artificiellement l'ouverture de la fibre. En effet, la présence d'une lame d'air d'indice de réfraction 1 entre la fibre et le doublet entraînerait une réfraction totale des rayons d'incidence moyenne et donc une fermeture du champ de recouvrement. Selon ce mode de réalisation, les fibres, pouvant notamment être des fibres grandisseuses, sont également couplées au tube intensificateur par collage.

Comme précédemment décrit, dans un épiscope, la voie de nuit est généralement libre en rotation et seuls le réflecteur pivotable 5 et le bioculaire 11 sont mobiles en rotation autour d'un axe vertical. Dans ce cas, le groupe arrière (23,24) est fixe et le groupe avant (20,21,22) est libre en rotation autour de l'axe passant par le tube intensificateur.

Il est à noter qu'il est également possible d'interposer une simple glace à la place de la galette de fibres entre le tube intensificateur et le bioculaire selon la présente invention.

Le tableau 5 suivant donne les valeurs et dispersions des focales de chacune des lentilles 20 à 24, pour les quatre exemples de formules représentés.

Tableau 5

|    | Formule 1 | Formule 2 | Formule 3 | Formule 4 | Dispersion |
|----|-----------|-----------|-----------|-----------|------------|
| 20 | 2,34 F | 2,17 F | 2,16 F | 2,55 F | 2,16 F / 2,55 F |
| 21 | - 2,63 F | - 2,53 F | - 2,46 F | - 3,03 F | - 2,46 F / - 3,03 F |
| 22 | 2,27 F | 2,49 F | 2,54 F | 2,17 F | 2,17 F / 2,54 F |
| 23 | 0,66 F | 0,74 F | 0,80 F | 0,62 F | 0,62 F / 0,80 F |
| 24 | - 1,54 F | - 2,92 F | - 4,79 F | - 1,24 F | - 4,79 F / - 1,24 F |

Le tableau 6 suivant donne les valeurs et dispersions des focales de chacun des groupes avant et arrière suivant la formule retenue.

Tableau 6

|    | Formule 1 | Formule 2 | Formule 3 | Formule 4 | Dispersion |
|----|-----------|-----------|-----------|-----------|------------|
| Groupe avant | 2,09 F | 2,16 F | 2,23 F | 1,94 F | 1,94 F / 2,23 F |
| Groupe arrière | 0,96 F | 0,91 F | 0,9 F | 0,99 F | 0,9 F / 0,99 F |

Il est à noter que, dans les tableaux 5 et 6, les dispersions de chaque lentille correspondent respectivement aux valeurs des focales de ces lentilles dans les formules 3 et 4.

Le tableau 7 suivant donne les plages de variation des indices de réfraction et des constringences de chacune des lentilles 20 à 24 pour la bande spectrale du "phosphore" $P_{20}$. Le "phosphore" $P_{20}$ est utilisé sur les écrans de sortie de certains tubes intensificateurs.

Tableau 7

| Lentille | 20 | 21 | 22 | 23 | 24 |
|----------|----|----|----|----|----|
| Indice | 1,48 à 1,75 | 1,75 à 1,85 | 1,75 à 1,95 | 1,75 à 1,95 | 1,75 à 1,95 |
| Constringence | 40 à 70 | 20 à 30 | 20 à 50 | 30 à 50 | 20 à 30 |

Les valeurs suivantes ont été utilisées pour les quatre formules précédentes:
- $\phi_{ps} >= 96$ mm
- $F \approx 40$ mm

pour une ouverture à F/0,42.

De la distorsion en croissant a été volontairement introduite dans les formules précédentes pour compenser celle de l'objectif de la voie de nuit et le champ bioculaire est supérieur ou égal à 41,5° (pour D sensiblement égale à 2 m).

Un des principaux objectifs de la présente invention est de corriger les aberrations du système, notamment l'astigmatisme et la courbure. La courbure est définie comme étant la moyenne des deux courbes d'astigmatisme sagittal et tangentiel. L'astigmatisme apparaît lorsque la distance de focalisation est différente pour les directions horizontale (sagittale) ou verticale (tangentielle).

L'astigmatisme est généralement contrôlé à l'aide d'une mire constituée d'un maillage de barres verticales ou horizontales.

La figure 6 représente les focales d'astigmatisme de la formule 2 pour un écart interpupillaire de 64 mm.

Le repère représenté comporte en abscisse la distance de focalisation en dioptries de la formule étudiée et en ordonnée la hauteur du point objet considéré.

La courbe 60 correspond à la focale d'astigmatisme sagittal et la courbe 61 à la courbe d'astigmatisme tangentiel. L'intervalle 63 correspond à la zone de vision bioculaire (zone de champ vue simultanément par les deux yeux ou champ de recouvrement).

Sur cette portion du champ, l'astigmatisme est très inférieur à 0,5 dioptrie, ce qui permet à l'observateur de fusionner sans problème les images vues par chacun des deux yeux.

L'image présente pas ou très peu de courbure de sorte qu'elle est vue dans un plan. Néanmoins, il est possible de développer des variantes avec davantage de courbure de manière à donner au système le degré de liberté nécessaire pour réduire l'astigmatisme en bord de champ.

La focale d'un système optique selon la présente invention est très faible et de l'ordre de 40 mm.

La répartition de puissance est la suivante pour chacun des groupes:

- groupe avant:     1,75 F / 2,5 F avec
                    partie avant: 6 F / 13 F
                    partie arrière: 2 F / 3,5 F
- groupe arrière: 0,85 F / 1,05 F

La présente invention est notamment destinée à être utilisée dans des voies de nuit d'épiscopes pour engins blindés, mais cette application n'est pas limitative, le système optique selon l'invention pouvant également être utilisé dans d'autres domaines où il est fait appel à des bioculaires pour permettre une observation.

**Revendications**

1.  Système optique bioculaire, du type constitué de deux groupes, un groupe avant (20,21,22) et un groupe arrière (23, 24), "avant" désignant le côté de l'observateur (8) et "arrière" le côté d'admission de rayons lumineux, caractérisé en ce que ledit groupe avant est constitué d'une partie avant (20, 21) et d'une partie arrière (22), la partie avant étant constituée d'une lentille (20) biconvexe convergente et d'un ménisque (21) concave vers l'avant, et en ce que ledit groupe arrière (23,24) est constitué d'un doublet (23,24) collé à face arrière plane comprenant une lentille convexe convergente collée à une lentille divergente, lesdites lentilles dudit doublet (23,24) collé présentant des dispersions différentes et complémentaires pour compenser le chromatisme, la focale dudit doublet (23,24) étant comprise entre 0,85 F et 1,05 F, où F est la focale dudit bioculaire.

2.  Système optique selon la revendication 1, caractérisé en ce que le centre de courbure de la face avant dudit doublet est positionné sur l'axe optique (26) de façon à être approximativement centré sur le plan de formation de l'image.

3.  Système optique selon l'une quelconque des revendications 1 et 2, caractérisé en ce que les indices de la lentille convexe convergente (23) et de la lentille divergente (24) sont compris entre 1,75 et 1,95 environ.

4.  Système optique selon la revendication 4, caractérisé en ce que ladite partie arrière (22) est constituée d'une lentille biconvexe (22).

5.  Système optique selon la revendication 4, caractérisé en ce que ladite lentille (20) biconvexe convergente et ledit ménisque (21) concave de ladite partie avant sont séparés par une lame d'air.

6.  Système optique selon la revendication 4, caractérisé en ce que ladite lentille (20) biconvexe convergente et ledit ménisque (21) concave de ladite partie avant sont collés de façon à constituer un doublet.

7.  Système optique selon la revendication 1, caractérisé en ce que ladite partie arrière (22) est constituée par une lentille plan-convexe (22) dont la face arrière est plane.

8.  Système optique selon la revendication 1, caractérisé en ce que ladite partie arrière (22) est constituée par une lame de verre à faces planes et parallèles (52) combinée à un ménisque (51) convexe vers l'avant situé entre ladite partie avant (20,21) et ladite lame de verre (52).

9. Système optique selon l'une quelconque des revendications 1 à 8, caractérisé en ce que ladite partie arrière (22) est coudée.

10. Système optique selon l'une quelconque des revendications 1 à 9 appliqué à un tube intensificateur (10) pour voie de nuit d'un épiscope, dans lequel une liaison optique entre la sortie écran (15) dudit tube intensificateur de lumière et ledit système est assurée par une galette de fibres collée sur ledit doublet (23,24) et sur l'écran dudit tube intensificateur (10).

11. Système optique selon l'une quelconque des revendications 1 à 10 caractérisé en ce que les dispersions des focales desdits groupes avant (20,21,22) et arrière (23,24) sont respectivement comprises entre 1,75 F et 2,5 F et entre 0,85 F et 1,05 F environ.

12. Episcope équipé d'un système optique selon l'une quelconque des revendications 1 à 11.

**Patentansprüche**

1. Binokulares optisches System, welches aus zwei Gruppen besteht, nämlich einer vorderen Gruppe (20, 21, 22) und einer hinteren Gruppe (23, 24), wobei "vorne" die Seite des Beobachters (8) und "hinten" die Einlaßseite von Lichtbündeln bezeichnet, dadurch gekennzeichnet, daß die vordere Gruppe aus einem vorderen Teil (20, 21) und einem hinteren Teil (22) besteht, wobei der vordere Teil durch eine bikonvexe Sammellinse (20) sowie einen nach vorne konkaven Meniskus (21) gebildet ist, und daß die hintere Gruppe (23, 24) durch eine verklebte Doppellinse (23, 24) mit ebener hinterer Seite gebildet ist, die eine konvexe Sammellinse umfaßt, die mit einer Zerstreuungslinse verklebt ist, wobei die Linsen der verklebten Doppellinse (23, 24) unterschiedliche und komplementäre Streuungen aufweisen, um die chromatische Aberration zu kompensieren, wobei die Brennweite der Doppellinse (23, 24) zwischen 0,85 F und 1,05 F beträgt, wobei F die Brennweite des Binokulars ist.

2. Optisches System nach Anspruch 1, dadurch gekennzeichnet, daß der Krümmungsmittelpunkt der vorderen Seite der Doppellinse auf der optischen Achse (26) angeordnet ist, so daß er näherungsweise auf die Bilderzeugungsebene zentriert ist.

3. Optisches System nach einem der Ansprüche 1 und 2, dadurch gekennzeichnet, daß die Brechungsindizes der konvexen Sammellinse (23) und der Zerstreuungslinse (24) zwischen etwa 1,75 und 1,95 betragen.

4. Optisches System nach Anspruch 4, dadurch gekennzeichnet, daß der hintere Teil (22) aus einer bikonvexen Linse (22) besteht.

5. Optisches System nach Anspruch 4, dadurch gekennzeichnet, daß die bikonvexe Sammellinse (20) und der konkave Meniskus (21) des vorderen Teiles durch eine Luftschicht voneinander getrennt sind.

6. Optisches System nach Anspruch 4, dadurch gekennzeichnet, daß die bikonvexe Sammellinse (20) und der konkave Meniskus (21) des vorderen Teiles miteinander verklebt sind, um eine Doppellinse zu bilden.

7. Optisches System nach Anspruch 1, dadurch gekennzeichnet, daß der hintere Teil (22) aus einer plankonvexen Linse (22) besteht, deren hintere Seite eben ist.

8. Optisches System nach Anspruch 1, dadurch gekennzeichnet, daß der hintere Teil (22) durch ein Glasplättchen (52) mit ebenen und parallenen Seiten gebildet ist, das mit einem nach vorne konvexen Meniskus (51) kombiniert ist, der zwischen dem vorderen Teil (20, 21) und dem Glasplättchen (52) angeordnet ist.

9. Optisches System nach einem der Ansprüche 1 bis 8, dadurch gekennzeichnet, daß der hintere Teil (22) abgewinkelt ist.

10. Optisches System nach einem der Ansprüche 1 bis 9, angewendet bei einer Verstärkungsröhre (10) für den Nachtsichtweg eines Episkops, bei dem eine optische Verbindung zwischen dem Ausgangsschirm (15) der Lichtverstärkungsröhre und dem System durch ein Bündel von Lichtleitfasern gewährleistet ist, die mit der Doppellinse (23, 24) und mit dem Bildschirm der Verstärkungsröhre (10) verklebt sind.

**11.** Optisches System nach einem der Ansprüche 1 bis 10, dadurch gekennzeichnet, daß die Streuungen der Brennweiten der vorderen Gruppe (20, 21, 22) und der hinteren Gruppe (23, 24) zwischen ungefähr 1,75 F und 2,5 F bzw. 0,85 F und 1,05 F betragen.

**12.** Episkop, versehen mit einem optischen System nach einem der Ansprüche 1 bis 11.

**Claims**

**1.** Binocular optical system, of the type formed by two groups, a front group (20,21,22) and a rear group (23,24), "front" designating the side on which the observer (8) is and "rear" the side on which the light rays enter, characterized in that the said front group is formed by a front part (20,21) and a rear part (22), the front part being formed by a convergent biconvex lens (20) and a frontwardly concave meniscus (21), and in that the said rear group (23,24) is formed by a bonded doublet (23,24) with a plane rear face comprising a convergent convex lens bonded to a divergent lens, the said lenses of the said bonded doublet (23,24) having different and complementary dispersions to compensate for the chromatism, the focal length of the said doublet (23,24) lying between 0.85F and 1.05F, where F is the focal length of the said binocular device.

**2.** Optical system according to Claim 1, characterized in that the centre of curvature of the front face of the said doublet is positioned on the optical axis (26) so as to be approximately centered in the plane of formation of the image.

**3.** Optical system according to either one of Claims 1 and 2, characterized in that the indices of the convergent convex lens (23) and of the divergent lens (24) lie between 1.75 and 1.95 approximately.

**4.** Optical system according to Claim 4, characterized in that the said rear part (22) is formed by a biconvex lens (22).

**5.** Optical system according to Claim 4, characterized in that the said convergent biconvex lens (20) and the said concave meniscus (21) of the said front part are separated by a layer of air.

**6.** Optical system according to Claim 4, characterized in that the said convergent biconvex lens (20) and the said concave meniscus (21) of the said front part are bonded so as to form a doublet.

**7.** Optical system according to Claim 1, characterized in that the said rear part (22) is formed by a planoconvex lens (22), the rear face of which is plane.

**8.** Optical system according to Claim 1, characterized in that the said rear part (22) is formed by a glass plate (52) with plane and parallel faces that is combined with a frontwardly convex meniscus (51) located between the said front part (20,21) and the said glass plate (52).

**9.** Optical system according to any one of Claims 1 to 8, characterized in that the said rear part (22) is elbowed.

**10.** Optical system according to any one of Claims 1 to 9, applied to an intensifier tube (10) for night-time channel of a periscope, in which an optical link between the screen output (15) of the said light intensifier tube and the said system is provided by a fibre wafer bonded to the said doublet (23,24) and to the screen of the said intensifier tube (10).

**11.** Optical system according to any one of Claims 1 to 10, characterized in that the dispersions of the focal lengths of the said front (20,21,22) and rear (23,24) groups respectively lie between 1.75F and 2.5F and between 0.85F and 1.05F approximately.

**12.** Periscope equipped with an optical system according to any one of Claims 1 to 11.

Fig. 1

Fig. 2

Fig. 6

Fig. 3

Fig. 4

Fig. 5